Europäisches Patentamt

**European Patent Office**

Office européen des brevets

(11) Numéro de publication: **0 243 314 B1**

## FASCICULE DE BREVET EUROPEEN

(45) Date de publication du fascicule du brevet: **23.01.91**

(51) Int. Cl.⁵: **G 01 D 5/26,** G 01 P 15/09, G 01 P 3/488

(21) Numéro de dépôt: **87810243.3**

(22) Date de dépôt: **21.04.87**

(54) **Dispositif de détection de grandeurs mécaniques et de transmission du signal détecté et utilisation du dispositif.**

(30) Priorité: **25.04.86 CH 1706/86**

(43) Date de publication de la demande: **28.10.87 Bulletin 87/44**

(45) Mention de la délivrance du brevet: **23.01.91 Bulletin 91/04**

(84) Etats contractants désignés: **AT CH DE FR GB IT LI NL SE**

(56) Documents cités:
EP-A-0 005 798
FR-A-2 325 068
GB-A-1 456 091
US-A-3 923 374
US-A-4 085 349
US-A-4 479 264

**PATENT ABSTRACTS OF JAPAN, vol. 7, no. 274 (P-241)1419r, 7 décembre 1983; & JP-A-58 151 562 (FUJITSU K.K.) 08-09-1983**

(73) Titulaire: **VIBRO-METER SA Route de Moncor 4 CH-1700 Fribourg (CH)**

(72) Inventeur: **Lustenberger, Martin Route des Dailles 11 CH-1752 Villars-sur-Glâne (CH)** Inventeur: **Schmid, Felix Le Bugnon 333 CH-1782 Belfaux (CH)**

(74) Mandataire: **Steiner, Martin et al c/o AMMANN INGENIEURS-CONSEILS EN PROPRIETE INTELLECTUELLE SA BERNE Schwarztorstrasse 31 CH-3001 Bern (CH)**

## Description

La présente invention concerne un dispositif de détection de grandeurs mécaniques avec un capteur mécano-électrique actif dont l'élément sensible est relié par des fils de connexion à un élément électrooptique utilisant l'effet combiné de Pockels et de Kerr dans un matériau ferroélectrique pour transformer le signal électrique délivré par le capteur actif en un signal lumineux. L'invention concerne aussi des utilisations du dispositif.

Il est connu de détecter des grandeurs mécaniques telles que des vibrations, par exemple de turbines ou de machines, à l'aide de capteurs piézoélectriques. Ces capteurs, qui sont montés à des endroits déterminés de la turbine ou de la machine, sont en fait des accéléromètres et ils comprennent essentiellement au moins une masse sismique agissant sur un transducteur piézoélectrique auquel elle transmet les vibrations à détecter. Il est aussi connu de détecter par exemple un nombre de tours à l'aide d'un capteur d'induction comprenant un aimant permanent logé dans une bobine, une roue dentée tournant devant un des pôles de l'aimant. Dans les dispositifs connus, la tension électrique délivrée par le capteur en réponse aux vibrations ou au nombre de tours est normalement transmise à un dispositif de mesure et d'affichage, par exemple un tableau de bord, éloigné de l'endroit où le capteur est monté sur la turbine ou dans la machine. Il faut donc transmettre la tension électrique relativement faible du capteur sur une assez longue distance. Cette tension est normalement transmise par un câble blindé ou coaxial dans le but d'éviter des perturbations du signal à transmettre par des influences électromagnétiques extérieures. Un tel système de transmission par câble blindé qui se répète pour chaque capteur installé dans la machine, est relativement lourd et encombrant et il n'est donc pas particulièrement bien adapté à une utilisation par exemple dans des transporteurs aériens.

On connait du document JP 58-151562 un dispositif de détection de vitesse de rotation dans lequel une tension induite par un aimant permanent 17 se déplaçant devant une bobine fixe est utilisée pour moduler la lumière envoyée par des conducteurs à fibres optiques dans un dispositif de modulation électrooptique. De même, le signal lumineux modulé est délivré dans des conducteurs à fibres optiques de sortie. Cependant, le dispositif n'est pas adapté à la détection et mesure de vibrations et l'élément électrooptique n'est pas situé à proximité immédiate de la bobine du capteur (élément actif). Le dispositif n'est pas miniature ni particulièrement compact, de sorte qu'il est relativement sensible aux perturbations électromagnétiques.

On connait aussi du document US 4 085 349 un transducteur piézoélectrique pour mesurer la vitesse instantanée de vibrations. Le transducteur comprend un empilage de cristaux piézoélectriques entre deux électrodes, ces cristaux étant soumis à l'action d'une masse sismique. La tension entre les électrodes est une mesure de l'accélération instantanée et la tension aux bornes de résistances en série avec les cristaux piézoélectriques est une mesure de la vitesse instantanée de la vibration. Cependant, le signal électrique délivré par le transducteur piézoélectrique n'est pas transformé en un signal lumineux circulant dans des conducteurs à fibres optiques. Il en résulte que la transmission du signal est relativement sensible aux perturbations électromagnétiques.

En conséquence, le but de la présente invention est de réaliser un dispositif de détection de grandeurs mécaniques et de transmission du signal détecté, le dispositif étant de faible poids, d'encombrement réduit, capable de transmettre un signal utile dans une large plage de fréquences et insensible aux perturbations électromagnétiques parasites.

Pour atteindre ce but, le dispositif est réalisé comme décrit dans les revendications 1, resp. 2 et des utilisations sont décrites dans les revendications 7 et 8. Par le fait que le signal électrique délivré par le capteur est directement transformé en un signal lumineux transmis lui-même par un guide de lumière, et qu'aucuue alimentation électrique du capteur ou de l'élément électrooptique est requise le dispositif est de faible poids et encombrement et il est par nature insensible aux perturbations électromagnétiques extérieures. Ceci montre que le dispositif selon l'invention est particulièrement bien adapté à une utilisation dans le domaine des transporteurs aériens, son champ d'application n'étant toutefois pas limité exclusivement à ce domaine.

L'invention va être décrite ci-après à l'aide d'un exemple d'exécution illustré dans le dessin dans lequel:

La figure 1 montre un dispositif de détection de vibrations utilisant le principe selon l'invention,

La figure 2 montre un dispositif de détection d'un nombre de tours utilisant le principe selon l'invention,

La figure 3 décrit le principe général de la conversion électrooptique, et

Les figures 4 à 8 montrent divers dispositifs de conversion électrooptique.

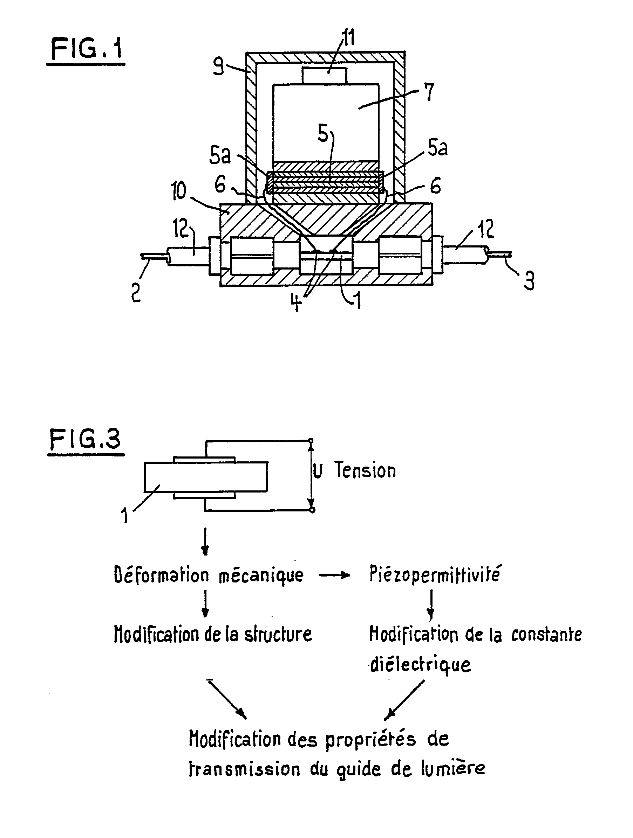

La figure 1 montre que le dispositif de détection de vibrations mécaniques se compose essentiellement d'un accéléromètre avec une base 10 sur laquelle est monté un ensemble d'éléments piézoélectriques 5 avec des électrodes 5a. Sur l'ensemble piézoélectrique 5 est montée une masse sismique 7 et le tout est fixé à la base 10 par un boulon de serrage 11, de sorte que les éléments piézoélectriques sont précontraints. Un couvercle 9 protège le capteur décrit ci-dessus. Ce capteur est dit actif car il ne requiert aucune alimentation. Chaque électrode 5a est reliée par un fil électrique 6 aux électrodes 4 d'un élément électrooptique 1 disposé au voisinage immédiat de l'ensemble piézoélectrique 5. L'élément électrooptique 1 est couplé à un guide de lumière, par exemple un conducteur à fibres optiques 12. Les fibres optiques d'entrée 2 sont reliées à une source de signal lumineux non représentée et les fibres optiques de sortie 3 transmettent le signal lumineux modulé à une électronique d'évaluation non représentée. Le transducteur piézoélectrique 5 délivre entre les fils 6 une tension électrique variable, proportionnelle aux vibrations mécaniques auxquelles est soumis le dispositif et cette tension est utilisée dans l'élément électrooptique 1 pour influencer les propriétés de transmission de cet élément, de sorte que le signal lumineux de sortie, dans le guide de lumière 12 est influencé ou modulé par les vibrations mécaniques à détecter.

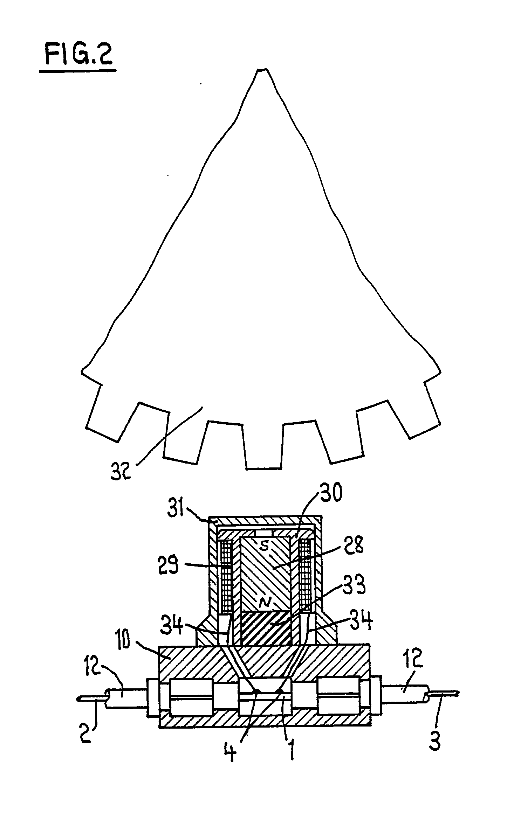

La figure 2 montre que le dispositif de détection du nombre de tours d'une roue dentée 32 comprend un transducteur actif formé d'un aimant permanent 28 logé dans une bobine 29. L'aimant permanent 28 est monté sur un support isolant 33 et la bobine se trouve dans un corps de bobine 30. Les fils de sortie 34 de la bobine 29 sont reliés à un élément électrooptique 1 couplé à un guide de lumière 12. La roue dentée 32 tourne devant un des pôles de l'aimant permanent et le passage de chaque dent induit une pointe de tension dans la bobine d'induction 29 par variation du flux magnétique de l'aimant. Comme dans le cas précédent, le signal lumineux dans le guide 1 est influencé par les pointes de tension aux bornes de la bobine. Le comptage du nombre de ces pointes dans un intervalle de temps déterminé permet de connaître le nombre de tours de la roue dentée.

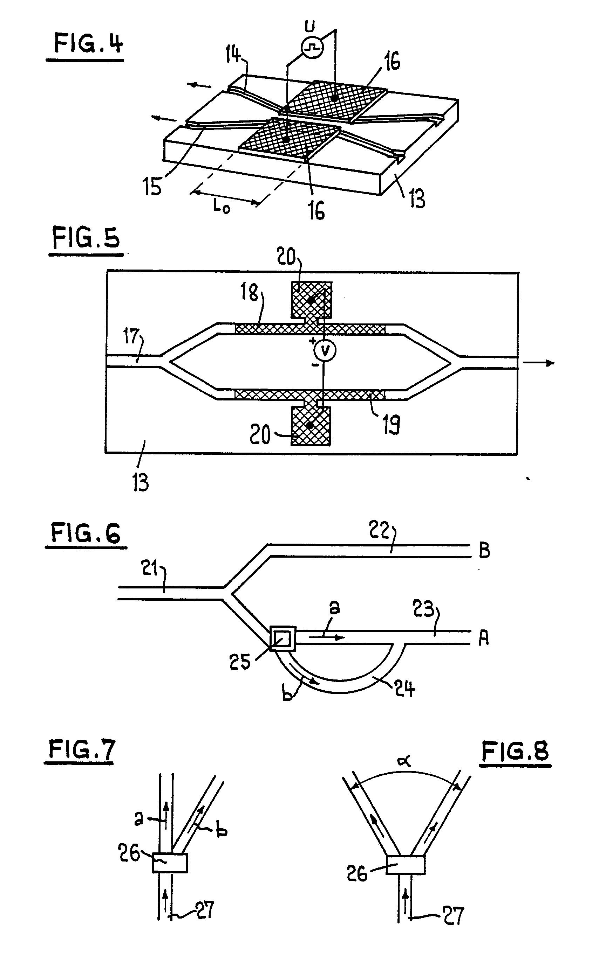

La figure 3 montre les effets de l'application d'une tension électrique U à un capteur actif formé d'un élément électrooptique ferroélectrique l. Il s'agit des effets combinés de Pockels et de Kerr. La tension appliquée U produit par effet Pockels (à travers l'effet piézo électrique inverse) une déformation mécanique de l'élément 1, cette déformation mécanique produisant d'une part une modification de la structure de l'élément 1 et d'autre part, par effet Kerr (électrostriction) un effet de piézopermittivité produisant une modification de la constante diélectrique. La modification de la structure et la modification de la constante diélectrique conduisent toutes deux à une modification de l'indice de réfraction de l'élément électrooptique, de sorte que le signal lumineux de sortie de l'élément électrooptique 1 est influencé par la tension électrique entre les fils 6, elle-même proportionnelle aux vibrations mécani-ques à détecter.

L'effet électrooptique se produit dans les structures mono et polycristallines ferroélectriques et dans les cristaux liquides. Il est le plus souvent décrit en fonction de la dépendance de l'indice de réfraction du champ électrique appliqué. Comme exemple de matériaux ferroélectriques présentant un effet électrooptique typique utilisable, on peut citer: $LiNbO_3$, $KH_2PO_4$, $BaTiO_3$, $ZnO$, $CdS$, $AgGaSe_2$, etc. Ces matériaux sont utilisés aujourd'hui de préférence dans la technique du laser et des fibres optiques, comme modulateurs extrêmement rapides. Dans notre cas, ce n'est pas cette rapidité qui est essentielle mais le fait que l'utilisation de conducteurs à fibres optiques permet de réduire le poids et l'encombrement des lignes de transmission tout en évitant des perturbations par signaux parasites électromagnétiques.

Les figures 4 à 8 montrent que la modification des propriétés de transmission de l'élément électrooptique dont il a été question ci-dessus, peut être produite au niveau de l'intensité, de la fréquence ou de la phase du signal lumineux ou encore par déflexion de ce signal.

La figure 4 montre un capteur actif électrooptique dans lequel la lumière est modulée en intensité. Il comprend un cristal 13 en niobiate de lithium ($LiNbO_3$) avec deux bandes 14 et 15 de 10 mm de longueur, de 5 µm de largeur et situées à une distance 5 µm l'une de l'autre. Ces bandes sont dopées au titane, ce qui augmente l'indice de réfraction, de sorte que ces bandes 14 et 15 se comportent comme des canaux optiques, exactement comme des fibres optiques. Ces canaux coopèrent selon le principe des résonateurs couplés. Dans l'un des canaux est envoyée la lumière infrarouge d'une diode laser non représentée et une fibre optique est couplée à la sortie de ce même canal. Les extrémités de l'autre canal restent ouvertes. Si les électrodes 16 sont sans tension, la lumière du canal alimenté peut passer dans l'autre canal et elle se perd à l'extérieur. Dans ce cas, la fibre optique ne reçoit pas de lumière. Si une tension U est appliquée entre les électrodes, la lumière ne peut plus quitter le canal alimenté et la fibre optique reçoit et transmet cette lumière. Il est visible que le modulateur selon figure 3 permet de modifier l'intensité du signal lumineux d'entrée.

La figure 5 montre un capteur actif dans lequel le signal lumineux de sortie est modulé en intensité par différence de phase. Comme dans le cas précédent, le canal 17 a été obtenu par diffusion de titane dans la surface du substrat 13, de sorte que le canal se comporte comme un guide pour la lumière entrante, exactement comme une fibre optique. Au milieu, le canal se divise en deux branches 18 et 19 qui se réunissent à nouveau vers la sortie de l'élément. Une tension V appliquée entre les électrodes 20 reliées aux branches 18 et 19 a pour effet de modifier de manière différente la vitesse de propagation de la lumière dans les deux branches, et ceci en raison des potentiels différents appliqués à ces branches. A l'endroit où les branches se réunissent à nouveau, les deux signaux ne sont pas en phase et l'intensité de la lumière de sortie augmente et diminue en synchronisme avec la tension V appliquée entre les électrodes 20.

La figure 6 montre un dispositif électrooptique dans lequel le signal lumineux sur une première sortie A peut présenter une différence de phase par rapport au signal lumineux sur une seconde sortie B. Un canal guide de lumière 21 est formé par exemple à l'aide de fibres optiques. Le canal 21 se divise en deux branches parallèles 22 et 23, la branche 23 comportant une déviation 24. A l'endroit de la séparation de la branche 23 et de la déviation 24 se trouve un élément électrooptique 25 susceptible de recevoir une tension électrique sur des électrodes non représentées, cette tension produisant une variation de l'indice de réfraction de l'élément 25. En l'absence de tension de commande, la lumière n'est pas déviée et elle sort du dispositif par le chemin indiqué par la flèche a. Dans ce cas, les signaux lumineux aux sorties A et B sont en phase. Si une tension est appliquée à l'élément 25, l'indice de réfraction varie et la lumière est déviée selon le chemin indiqué par la flèche b. Dans ce cas, les signaux lumineux aux sorties A et B du dispositif ne sont pas en phase.

La figure 7 montre qu'un élément électrooptique 26 peut commander la déviation d'un flux lumineux entrant 27. En l'absence de tension de commande, la lumière n'est pas déviée et elle sort de l'élément selon un chemin indiqué par la flèche a. Lorsqu'une tension de commande est appliquée à l'élément 26, la lumière est déviée par variation de l'indice de réfraction et elle sort de l'élément par un chemin indiqué par la flèche b. Il s'agit donc ici d'un élément par tout ou rien. Enfin, la figure 8 montre qu'un flux lumineux incident 27 peut être dévié dans un domaine angulaire par l'élément électrooptique 26, chaque déviation angulaire correspondant à une fréquence de sortie ou encore à une couleur de sortie différente.

Ce qui précède montre qu'il existe un très grand nombre de possibilités de réalisation de l'élément électrooptique.

## Revendications

1. Dispositif de détection de grandeurs mécaniques avec un capteur mécano-électrique actif dont l'élément sensible (5, 29) est relié par des fils de connexion (6, 34) à un élément électrooptique (1) utilisant l'effet combiné de Pockels et de Kerr dans un matériau ferroélectrique pour transformer le signal électrique délivré par le capteur actif en un signal lumineux, caractérisé en ce que le dispositif est prévu pour détecter des vibrations mécaniques, avec une masse sismique (7) agissant sur un ensemble d'éléments piézoélectriques (5) délivrant une tension proportionnelle aux vibrations à détecter, la tension électrique délivrée par les éléments piézoélectriques (5) produisant une variation de l'indice de réfraction de l'élément électrooptique (1) se traduisant par une modulation du signal lumineux qui le traverse les éléments piézoélectrique (5) électrooptique (1) ainsi que les fils de connexion (6, 34) formant un ensemble compact monté dans un même boîtier (9, 10) servant de blindage contre les influences électromagnétiques.

2. Dispositif de détection de grandeurs mécaniques avec un capteur mécano-électrique actif dont l'élément sensible (5, 29) est relié par des fils de connexion (6, 34) à un élément électrooptique (1) utilisant l'effet combiné de Pockels et de Kerr dans un matériau ferroélectrique pour transformer le signal électrique délivré par le capteur actif en un signal lumineux, caractérisé en ce que le dispositif est prévu pour mesurer un nombre de tours, avec un aimant permanent (28) logé dans une bobine (29) et une roue dentée (32) tournant devant un des pôles de l'aimant, chaque dent de la roue dentée (32) produisant une variation du flux magnétique de l'aimant et provoquant par induction l'apparition d'une pointe de tension aux bornes de la bobine (29), ladite pointe de tension produisant une variation de l'indice de réfraction de l'élément électrooptique (1) se traduisant par une modulation du signal lumineux qui le traverse, les éléments piézoélectrique (5), électrooptique (1) ainsi que les fils de connexion (6, 34) formant un ensemble compact monté dans un même boîtier (9, 10) servant de blindage contre les influences électromagnétiques.

3. Dispositif selon l'une des revendications 1 ou 2, caractérisé en ce que le capteur mécano-électrique est relié sans intermédiaire à l'élément électrooptique (1) par lesdits fils de connexion.

4. Dispositif selon l'une des revendications 1 à 3, caractérisé en ce que le signal lumineux entrant et sortant de l'élément électrooptique (1) circule dans un conducteur à fibres optiques (12).

5. Dispositif selon l'une des revendications 1 à 4, caractérisé en ce que les matériaux utilisés pour l'élément électrooptique (1) sont $LiNbO_3$, $KH_2PO_4$, $BaTiO_3$, $ZnO$, $CdS$, ou $AgGaSe_2$.

6. Dispositif selon l'une des revendications 1 à 5, caractérisé en ce que la modification des propriétés de transmission de la lumière dans l'élément électrooptique (1) consiste en une variation de l'amplitude, de la fréquence ou de la phase du signal lumineux incident, selon le dispositif de conversion choisi.

7. Utilisation du dispositif selon la revendication 1 pour détecter les vibrations dans un véhicule aérien et transmettre le signal détecté.

8. Utilisation du dispositif selon la revendication 2 pour détecter un nombre de tours et transmettre le signal détecté.

## Patentansprüche

1. Vorrichtung zur Erfassung mechanischer Grössen, mit einem aktiven elektromechanischen Wandler, dessen empfindliches Element (5, 29) über Anschlussdrähte (6, 34) an ein elektrooptisches Element (1) angeschlossen ist, welches den kombinierten Pockels- und Kerreffekt in einem ferroelektrischen Material benützt, um das vom aktiven Wandler abgegebene elektrische Signal in ein Lichtsignal umzuwandeln, dadurch gekennzeichnet, dass die Vorrichtung zur Erfassung von mechanischen Vibrationen vorgesehen ist und eine seismische Masse (7) aufweist, die auf eine Anzahl von piezoelektrischen Elementen (5) wirkt, welche eine den zu erfassenden Vibrationen proportionale Spannung abgeben, wobei die von den piezoelektrischen Elementen (5) abgegebene elektrische Spannung eine Veränderung des Brechungskoeffizienten des elektrooptischen Elementes (1) bewirkt, die eine Modulation des dieses Element durchquerenden Lichtsignals hervorruft, und wobei das piezoelektrische (5) und das elektrooptische Element (1) sowie die Anschlussdrähte (6, 34) eine kompakte Einheit bilden, die in ein und demselben Gehäuse (9, 10) untergebracht ist, das als Abschirmung gegen elektromagnetische Einflüsse dient.

2. Vorrichtung zur Erfassung mechanischer Grössen, mit einem aktiven elektromechanischen Wandler, dessen empfindliches Element (5, 29) über Anschlussdrähte (6, 34) an ein elektrooptisches Element (1) angeschlossen ist, welches den kombinierten Pockels- und Kerreffekt in einem ferroelektrischen Material benützt, um das vom aktiven Wandler abgegebene elektrische Signal in ein Lichtsignal umzuwandeln, dadurch gekennzeichnet, dass die Vorrichtung zur Messung einer Drehzahl vorgesehen ist und einen in einer Spule (29) befindlichen Permanentmagneten (28) und ein vor einem der Pole des Magneten drehendes Zahnrad (32) aufweist, wobei jeder Zahn des Zahnrads (32) eine Veränderung des magnetischen Flusses des Magneten bewirkt und durch Induktion an den Klemmen der Spule (29) eine Spannungsspitze hervorruft, welche eine Veränderung des Brechungskoeffizienten des elektrooptischen Elementes (1) bewirkt, die eine Modulation des dieses Element durchquerenden Lichtsignals hervorruft, und wobei das piezoelektrische (5) und das elektrooptische Element (1) sowie die Anschlussdrähte (6, 34) eine kompakte Einheit bilden, die in ein und demselben Gehäuse (9, 10) untergebracht ist, das als Abschirmung gegen elektromagnetische Einflüsse dient.

3. Vorrichtung nach einem der Ansprüche 1 oder 2, dadurch gekennzeichnet, dass der elektromechanische Wandler über die genannten Anschlussdrähte unmittelbar an das elektrooptische Element (1) angeschlossen ist.

4. Vorrichtung nach einem der Ansprüche 1 bis 3, dadurch gekennzeichnet, dass das Lichtsignal am Eingang und am Ausgang des elektrooptischen Elementes (1) in einem optischen Faserleiter (12) übertragen wird.

5. Vorrichtung nach einem der Ansprüche 1 bis 4, dadurch gekennzeichnet, dass die für das elektrooptische Element (1) benützten Materialien LiNbO₃, KH₂PO₄, BaTiO₃, ZnO, CdS oder AgGaSe₂ sind.

6. Vorrichtung nach einem der Ansprüche 1 bis 5, dadurch gekennzeichnet, dass die Veränderung der Licht-Uebertragungseigenschaften im elektrooptischen Element (1) aus einer Veränderung der Amplitude, der Frequenz oder der Phase des einfallenden Lichtsignals besteht, je nach der Umformungsvorrichtung.

7. Verwendung der Vorrichtung nach Anspruch 1 zur Erfassung der Vibrationen in einem Luftfahrzeug und zur Uebertragung des erfassten Signals.

8. Verwendung der Vorrichtung nach Anspruch 2 zur Erfassung einer Drehzahl und zur Uebertragung des erfassten Signals.

### Claims

1. Device for the detection of mechanical values with an active electromechanical sensor, the sensitive element of which (5, 29) is connected by connecting wires (66, 34) to an electrooptical element (1) working according to the combined effect of Pockels and Kerr in a ferroelectrical material in order to transform the electrical signal delivered by the active sensor into a luminous signal, characterized in that the device is provided for detecting mechanical vibrations, with a seismic mass (7) acting upon a set of piezoelectric elements (5) delivering a voltage proportional to the vibrations to be detected, the electrical voltage delivered by the piezoelectric elements (5) causing a variation of the refractive index of the electrooptical element (1) thus producing a modulation of the luminous signal passing through it, the piezoelectric elements (5), the electrooptical elements (1) as well as the connecting wires (6, 34) forming a compact set of elements mounted into the same housing (9, 10) which serves as a screen against the electromagnetic influences.

2. Device for the detection of mechanical values with an active electromechanical sensor, the sensitive element of which (5, 29) is connected by connecting wires 66, 34) to an electrooptical element (1) working according to the combined effect of Pockels and Kerr in a ferroelectrical material in order to transform the electrical signal delivered by the active sensor into a luminous signal, characterized in that the device is provided for measuring a number of turns, with a permanent magnet (28) located into a coil (29) and a toothed wheel (32) rotating in front of one of the poles of the magnet, each tooth of the toothed wheel (32) producing a variation of the magnetic flux of the magnet and causing by induction a peak of voltage across the terminals of the coil (29), said peak of voltage producing a variation of the refraction index of the electrooptical element (1) thus producing a modulation of the luminous signal passing through it, the piezoelectric elements (5), the electrooptical elements (1) as well as the connecting wires (6, 34) forming a compact set of elements mounted into the same housing (9, 10) which serves as a screen against the electromagnetic influences.

3. Device according to one of the claims 1 or 2, characterized in that the electromechanical sensor is connected without intermediary to the electrooptical element (1) by said connecting wires.

4. Device according to one of the claims 1 to 3, characterized in that the luminous signal entering and leaving the electrooptical element (1) flows into a fiber optical light guide (12).

5. Device according to one of the claims 1 to 4, characterized in that the materials utilized for the electrooptical element (1) are LiNbO₃, KH₂PO₄, BaTiO₃, ZnO, CdS or AgGaSe₂.

6. Device according to one of the claims 1 to 5, characterized in that the modification of the properties of transmission of the light in the electrooptical element (1) consists in a variation of the amplitude, of the frequency or of the phase of the incident luminous signal, according to the selected converting device.

7. Utilization of the device according to claim 1 for detecting the vibrations in an aeronautical vehicle and for transmitting the detected signal.

8. Utilization of the device according to claim 2 for detecting a number of turns and for transmitting the detected signal.

FIG.1

FIG.3

U Tension

Déformation mécanique ⟶ Piézopermittivité

Modification de la structure          Modification de la constante
                                      diélectrique

Modification des propriétés de
transmission du guide de lumière

1

FIG.2

FIG.4

FIG.5

FIG.6

FIG.7

FIG.8